# EUROPEAN PATENT SPECIFICATION

(11) **EP 3 944 506 B1**
(45) Date of publication and mention of the grant of the patent: **07.10.2026**
(21) Application number: 20777810.1
(22) Date of filing: 11.03.2020
(51) Int. Cl.: H04B 1/00

(54) **RADIO FREQUENCY FRONT-END CIRCUIT AND MOBILE TERMINAL**
FUNKFREQUENZ-FRONTENDSCHALTUNG UND MOBILES ENDGERÄT
CIRCUIT FRONTAL RADIOFRÉQUENCE ET TERMINAL MOBILE

(30) Priority: 22.03.2019 CN 201910222451
(43) Date of publication of application: 26.01.2022
(73) Proprietor: VIVO MOBILE COMMUNICATION CO., LTD., Dongguan, Guangdong 523860 (CN)
(72) Inventor: HSIEH, Cheng-Nan, Dongguan, Guangdong 523860 (CN); SHENG, Xuefeng, Dongguan, Guangdong 523860 (CN)
(74) Representative: Conti, Marco
(86) International application number: PCT/CN2020/078865
(87) International publication number: WO 2020/192427

(56) References cited:
- CN-A- 108 808 265
- CN-A- 109 951 192
- CN-U- 206 211 999
- CN-U- 207 266 019
- US-A1- 2005 064 897
- US-A1- 2006 025 171
- US-A1- 2015 229 463

## Description

### TECHNICAL FIELD

Embodiments of this disclosure relate to the field of terminal application technologies, and in particular, to a radio frequency front-end circuit and a mobile terminal.

### BACKGROUND

With the rapid development of Internet communication technology and the increasing popularization of smart mobile terminals, users are having growing demands for data traffic. From a transmission rate of 100 Mbit/s to 1 Gbit/s in 4G to a peak transmission rate of up to 20 Gbit/s in 5G new radio (NR), the increase in rates requires 5G to support the key technology of 4x4 multiple input multiple output (Multiple Input Multiple Output, MIMO).

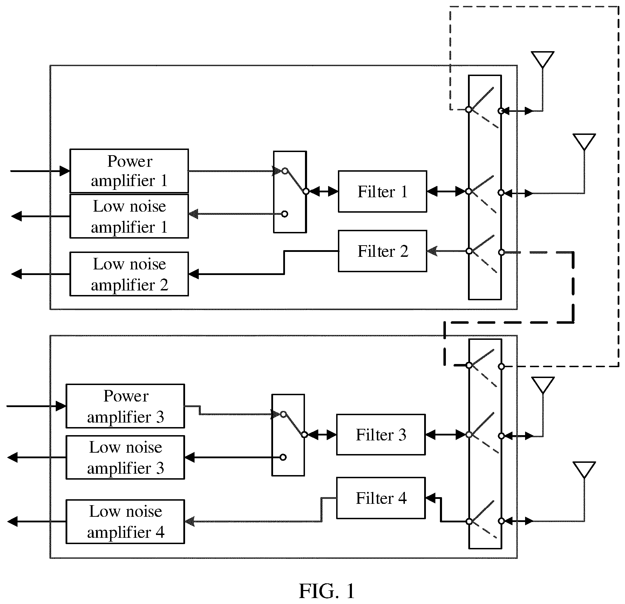

FIG. 1 is a schematic structural diagram of a radio frequency front-end circuit of a 5G mobile terminal device. This circuit structure is used to realize one-transmit four-receive 1T4R and two-transmit four-receive 2T4R schemes. The layout wiring of the 5G mobile terminal device directly affects path loss. As shown in FIG. 1, in the radio frequency front-end circuit structure of the 5G mobile terminal device in the related art, the long wiring leads to a high path loss. In addition, in the radio frequency front-end circuit structure of the 5G mobile terminal device in the related art, a three-pole three-throw switch is typically used. A higher signal transmission frequency leads to a higher bandwidth and a greater component loss, making output power hard to meet requirements. Therefore, how to reduce the path loss, component loss, and circuit design complexity requires an urgent solution. US2005/064897A1 provides a dual band transmitting/receiving device, which can perform transmission and diversity reception with low insertion loss in that the number of switches for switching antennas is small. The dual band transmitting/receiving device is constituted such that transmitting/receiving dual band antennas 1 and 2 capable of being used in both of 5 GHz band used with IEEE 802.11a communication standard and 2.4 GHz band used with IEEE 802.11b communication standard are connected to respective transmitting circuits 7 and 9 and respective receiving circuits 8 and 10 used with respective communication standards, in a state where the above each signaling path between the each antenna and the each receiving circuit or transmitting circuit is connected via the only one switch. US2006/025171A1 provides an information handling system (IHS), which includes multiple radios having different architectures. The IHS also includes multiple antennas. A selected one of the radios is given priority over other of the radios to be connected to an appropriate one of the multiple antennas. US2005/064897A1 discloses similar prior art.

### SUMMARY

Embodiments of this disclosure provide a radio frequency front-end circuit and a mobile terminal, so as to resolve a problem of complicated circuit design in a structure of a radio frequency front-end circuit of a related 5G mobile terminal device. The present invention is set out in the appended set of claims.

To resolve the foregoing technical problem, this disclosure is implemented as follows.

According to a first aspect, an embodiment of this disclosure provides a radio frequency front-end circuit according to claim 1.

According to a second aspect, an embodiment of this disclosure further provides a mobile terminal, including:
a controller; and
the radio frequency front-end circuit in the foregoing embodiment, where
the controller is configured to control opening and closing of a first double-pole double-throw switch, opening and closing of a first changeover switch, and/or opening and closing of a second changeover switch.

In the foregoing solutions of some embodiments of this disclosure, the four receiving circuits, namely, the first signal receiving circuit, the second signal receiving circuit, the third signal receiving circuit, and the fourth signal receiving circuit, can receive a signal at the same time; and the first signal transmitting circuit and/or the second signal transmitting circuit can be flexibly closed through the first double-pole double-throw switch and the first changeover switch or through the first double-pole double-throw switch and the second changeover switch. This circuit design is simple, and can shorten layout routing for radio frequency while implementing signal transmission and/or reception, thereby reducing path loss.

### BRIEF DESCRIPTION OF DRAWINGS

FIG. 1 is a schematic structural diagram of a radio frequency front-end circuit in the related art; and
FIG. 2 is a schematic structural diagram of a radio frequency front-end circuit according to some embodiments of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are merely some rather than all of the embodiments of this disclosure.

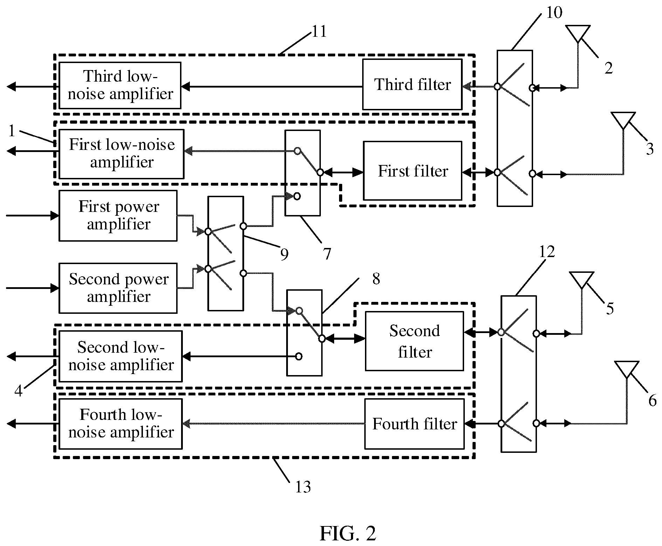

FIG. 2 is a schematic structural diagram of a radio frequency front-end circuit according to some embodiments of this disclosure. The radio frequency front-end circuit includes: a first signal receiving circuit 1 that receives a signal through one of a first antenna 2 and a second antenna 3 that are interconnected; a second signal receiving circuit 4 that receives a signal through one of a third antenna 5 and a fourth antenna 6 that are interconnected; a first signal transmitting circuit and a second signal transmitting circuit; a first changeover switch 7 and the second changeover switch 8; and a first double-pole double-throw switch 9, which includes a first fixed terminal connected to the first changeover switch 7, a second fixed terminal connected to the second changeover switch 8, a first movable terminal, and a second movable terminal, where the first double-pole double-throw switch 9 is configured to connect the first fixed terminal to the first movable terminal or the second movable terminal, and further configured to connect the second fixed terminal to the first movable terminal or the second movable terminal.

The first signal transmitting circuit is closed through the first double-pole double-throw switch 9 and the first changeover switch 7, and transmits a signal through the first antenna 2 or second antenna 3; or the first signal transmitting circuit is closed through the first double-pole double-throw switch 9 and the second changeover switch 8, and transmits a signal through the third antenna 5 or fourth antenna 6.

The second signal transmitting circuit is closed through the first double-pole double-throw switch 9 and the first changeover switch 7, and transmits a signal through the first antenna 2 or second antenna 3; or the second signal transmitting circuit is closed through the first double-pole double-throw switch 9 and the second changeover switch 8, and transmits a signal through the third antenna 5 or fourth antenna 6.

Herein, both the first signal transmitting circuit and the second signal transmitting circuit can be flexibly closed through the first double-pole double-throw switch 9 and the first changeover switch 7 or through the first double-pole double-throw switch 9 and the second changeover switch 8, and can transmit a signal through any antenna of the radio frequency front-end circuit. The circuit design is simple, and provision of the first double-pole double-throw switch shortens a routing length between the circuit and the antennas, thereby reducing path loss.

Optionally, as shown in FIG. 2, the radio frequency front-end circuit according to some embodiments of this disclosure further includes a second double-pole double-throw switch 10 connected to the first signal receiving circuit 1 or the first signal transmitting circuit or the second signal transmitting circuit, including: a third movable terminal, a third fixed terminal connected to the first antenna 2, and a fourth fixed terminal connected to the second antenna 3, where the second double-pole double-throw switch is configured to connect the first movable terminal to the third fixed terminal or the fourth fixed terminal.

Herein, the second double-pole double-throw switch 10 can implement a connection between the following radio frequency circuit and the first antenna 2 or second antenna 3: the first signal receiving circuit 1 or the first signal transmitting circuit or the second signal transmitting circuit. Because the second double-pole double-throw switch 10 has low component loss and good isolation, not only transmission performance of the radio frequency front-end circuit can be improved, but also reception performance of the radio frequency front-end circuit can be improved.

Further, the radio frequency front-end circuit according to some embodiments of this disclosure further includes: a third signal receiving circuit 11, which is connected to a fourth movable terminal of the second double-pole double-throw switch 10 and receives a signal through one of the first antenna 2 and the second antenna 3, where the second double-pole double-throw switch 10 is further configured to connect the fourth movable terminal to the third fixed terminal or the fourth fixed terminal.

Herein, the second double-pole double-throw switch 10 can further implement a connection between the third signal receiving circuit 11 and the first antenna 2 or second antenna 3. Because the second double-pole double-throw switch 10 has low component loss and good isolation, transmission performance of the third signal receiving circuit 11 can be improved.

It should be noted that the second double-pole double-throw switch 10 includes two movable terminals (namely, the third movable terminal and the fourth movable terminal) and two fixed terminals (namely, the third fixed terminal and the fourth fixed terminal). Each of the movable terminals can be connected to one of the two fixed terminals.

Herein, the third signal receiving circuit 11 includes a third low-noise amplifier and a third filter, where the third filter is connected to both an input terminal of the third low-noise amplifier and the fourth movable terminal of the second double-pole double-throw switch 10.

Specifically, when a fifth movable terminal of the first changeover switch 7 is connected to a fifth fixed terminal of the first changeover switch 7, the first signal receiving circuit 1 is closed.

When the fifth movable terminal is connected to a sixth fixed terminal of the first changeover switch 7, and the first movable terminal of the first double-pole double-throw switch 9 is connected to the first fixed terminal of the first double-pole double-throw switch 9, the first signal transmitting circuit is closed, and the first fixed terminal is connected to the sixth fixed terminal.

When the fifth movable terminal is connected to a sixth fixed terminal of the first changeover switch 7, and the second movable terminal of the first double-pole double-throw switch 9 is connected to the first fixed terminal of the first double-pole double-throw switch 9, the second signal transmitting circuit is closed.

Herein, optionally, the first changeover switch 7 is a single-pole double-throw switch, including a movable terminal (namely, the fifth movable terminal) and two fixed terminals (namely, the fifth fixed terminal and the sixth fixed terminal). The first changeover switch 7 implements switching between a receiving circuit and a transmitting circuit.

Based on this, in an optional embodiment, the first signal receiving circuit 1 includes a first low-noise amplifier and a first filter.

Specifically, an input terminal of the first low-noise amplifier is connected to the fifth fixed terminal of the first changeover switch 7; and the first filter is connected to both the fifth movable terminal of the first changeover switch 7 and the third movable terminal of the second double-pole double-throw switch 10.

Optionally, as shown in FIG. 2, the radio frequency front-end circuit according to some embodiments of this disclosure further includes a third double-pole double-throw switch 12 connected to the second signal receiving circuit 4 or the first signal transmitting circuit or the second signal transmitting circuit, where the third double-pole double-throw switch 12 includes a sixth movable terminal, a seventh fixed terminal connected to the third antenna 5, and an eighth fixed terminal connected to the fourth antenna 6, where the third double-pole double-throw switch 12 is configured to connect the sixth movable terminal to the seventh fixed terminal or the eighth fixed terminal.

Herein, the third double-pole double-throw switch 12 can implement a connection between the following radio frequency circuit and the third antenna 5 or fourth antenna 6: the second signal receiving circuit 4 or the first signal transmitting circuit or the second signal transmitting circuit. Because the third double-pole double-throw switch 12 has low component loss and good isolation, not only transmission performance of the radio frequency front-end circuit can be improved, but also reception performance of the radio frequency front-end circuit can be improved.

Further, the radio frequency front-end circuit according to some embodiments of this disclosure further includes a fourth signal receiving circuit 13, which is connected to the seventh movable terminal of the third double-pole double-throw switch 12 and receives a signal through one of the third antenna 5 and the fourth antenna 6, where the third double-pole double-throw switch 12 is further configured to connect the seventh movable terminal to the seventh fixed terminal or the eighth fixed terminal.

Herein, the third double-pole double-throw switch 12 can further implement a connection between the fourth signal receiving circuit 13 and the third antenna 5 or fourth antenna 6. Because the third double-pole double-throw switch 12 has low component loss and good isolation, transmission performance of the fourth signal receiving circuit 13 can be improved.

It should be noted that the third double-pole double-throw switch 12 includes two movable terminals (namely, the sixth movable terminal and the seventh movable terminal) and two fixed terminals (namely, the seventh fixed terminal and the eighth fixed terminal). Each of the movable terminals can be connected to one of the two fixed terminals.

Herein, the fourth signal receiving circuit 13 includes a fourth low-noise amplifier and a fourth filter, where the fourth filter is connected to both an input terminal of the fourth low-noise amplifier and the seventh movable terminal of the third double-pole double-throw switch 12.

Specifically, when an eighth movable terminal of the second changeover switch 8 is connected to a ninth fixed terminal of the second changeover switch 8, the second signal receiving circuit 4 is closed.

When the eighth movable terminal is connected to a tenth fixed terminal of the second changeover switch 8, and the first movable terminal of the first double-pole double-throw switch 9 is connected to the second fixed terminal of the first double-pole double-throw switch 9, the first signal transmitting circuit is closed, and the second fixed terminal is connected to the tenth fixed terminal.

When the eighth movable terminal is connected to the tenth fixed terminal of the second changeover switch 8, and the second movable terminal of the first double-pole double-throw switch 9 is connected to the second fixed terminal of the first double-pole double-throw switch 9, the second signal transmitting circuit is closed.

Herein, optionally, the second changeover switch 8 is a single-pole double-throw switch, including a movable terminal (namely, the eighth movable terminal) and two fixed terminals (namely, the ninth fixed terminal and the tenth fixed terminal). The second changeover switch 8 implements switching between a receiving circuit and a transmitting circuit.

Based on this, in another optional embodiment, the second signal receiving circuit 4 includes a second low-noise amplifier and a second filter.

Specifically, an input terminal of the second low-noise amplifier is connected to the ninth fixed terminal of the second changeover switch 8; and the second filter is connected to both the eighth movable terminal of the second changeover switch 8 and the sixth movable terminal of the third double-pole double-throw switch 12.

The first signal transmitting circuit includes a first power amplifier, where an output terminal of the first power amplifier is connected to the first movable terminal of the first double-pole double-throw switch 9.

Specifically, in the embodiment shown in FIG. 2, when the first movable terminal of the first double-pole double-throw switch 9 is connected to the first fixed terminal of the first double-pole double-throw switch 9, and the fifth movable terminal of the first changeover switch 7 is connected to the sixth fixed terminal of the first changeover switch 7, the first signal transmitting circuit is closed, and in this case, the first signal transmitting circuit includes the first power amplifier and the first filter.

When the first movable terminal of the first double-pole double-throw switch 9 is connected to the second fixed terminal of the first double-pole double-throw switch 9, and the eighth movable terminal of the second changeover switch 8 is connected to the tenth fixed terminal of the second changeover switch 8, the first signal transmitting circuit is closed, and in this case, the first signal transmitting circuit includes the first power amplifier and the second filter.

The second signal transmitting circuit includes a second power amplifier, where an output terminal of the second power amplifier is connected to the second movable terminal of the first double-pole double-throw switch 9.

Specifically, in the embodiment shown in FIG. 2, when the second movable terminal of the first double-pole double-throw switch 9 is connected to the first fixed terminal of the first double-pole double-throw switch 9, and the fifth movable terminal of the first changeover switch 7 is connected to the sixth fixed terminal of the first changeover switch 7, the second signal transmitting circuit is closed, and in this case, the second signal transmitting circuit includes the second power amplifier and the first filter.

When the second movable terminal of the first double-pole double-throw switch 9 is connected to the second fixed terminal of the first double-pole double-throw switch 9, and the eighth movable terminal of the second changeover switch 8 is connected to the tenth fixed terminal of the second changeover switch 8, the second signal transmitting circuit is closed, and in this case, the second signal transmitting circuit includes the second power amplifier and the second filter.

Further, the radio frequency front-end circuit according to some embodiments of this disclosure further includes a radio frequency transceiver (not shown in the figure). The radio frequency transceiver is connected to all of the first signal receiving circuit 1, the second signal receiving circuit 4, the first signal transmitting circuit, and the second signal transmitting circuit.

In addition, the radio frequency transceiver is further connected to both the third signal receiving circuit 11 and the fourth signal receiving circuit 13.

Specifically, the radio frequency transceiver may include: a first signal receiving port, a second signal receiving port, a third signal receiving port, a fourth signal receiving port, a first signal transmitting port, and a second signal transmitting port.

The first signal receiving port is connected to an output terminal of the first low-noise amplifier of the first signal receiving circuit 1. The second signal receiving port is connected to an output terminal of the second low-noise amplifier of the second signal receiving circuit 4. The third signal receiving port is connected to an output terminal of the third low-noise amplifier of the third signal receiving circuit 11. The fourth signal receiving port is connected to an output terminal of the fourth low-noise amplifier of the fourth signal receiving circuit 13.

The first signal transmitting port is connected to the first power amplifier of the first signal transmitting circuit. The second signal transmitting port is connected to the second power amplifier in the second signal transmitting circuit.

The radio frequency front-end circuit in FIG. 2 can implement a 1T4R/2T4R function of a 5G NR system, to ensure the function of 1 transmit and 4 receive, or 2 transmit and 4 receive.

The following briefly describes a signal transmission process of the radio frequency front-end circuit of this disclosure.

### For a transmission path:

1. After a first to-be-transmitted signal is transmitted by the radio frequency transceiver and amplified by the first power amplifier, and then reaches the first double-pole double-throw switch 9,
   (1) the signal may be transmitted to the first changeover switch 7 and filtered by the first filter, and then reaches the second double-pole double-throw switch 10 to be transmitted from the first antenna 2 or second antenna 3; or
   (2) the signal may be transmitted to the second changeover switch 8 and filtered by the second filter, and then reaches the third double-pole double-throw switch 12 to be transmitted from the third antenna 5 or fourth antenna 6.
2. After a second to-be-transmitted signal is transmitted by the radio frequency transceiver and amplified by the second power amplifier, and then reaches the first double-pole double-throw switch 9,
   (1) the signal may be transmitted to the first changeover switch 7 and filtered by the first filter, and then reaches the second double-pole double-throw switch 10 to be transmitted from the first antenna 2 or second antenna 3; or
   (2) the signal may be transmitted to the second changeover switch 8 and filtered by the second filter, and then reaches the third double-pole double-throw switch 12 to be transmitted from the third antenna 5 or fourth antenna 6.

For a reception path:
because the 5G NR system needs to support 4 simultaneous receptions, a first to-be-received signal may be received through the first antenna 2, then reaches the second double-pole double-throw switch 10, and then is filtered by the first filter, transferred through the first changeover switch 7 to the first low-noise amplifier for amplification, and transmitted to the radio frequency transceiver for subsequent processing.

Similarly, a third to-be-received signal may be received through the third antenna 5, then reaches the third double-pole double-throw switch 12, and then is filtered by the second filter, transferred through the second changeover switch 8 to the second low-noise amplifier for amplification, and transmitted to the radio frequency transceiver for subsequent processing.

A second to-be-received signal may be received through the second antenna 3, then transferred through the second double-pole double-throw switch 10 to the third filter for filtering, and then is amplified by the third low-noise amplifier and transmitted to the radio frequency transceiver for subsequent processing.

Similarly, a fourth to-be-received signal may be received through the fourth antenna 6, then transferred through the third double-pole double-throw switch 12 to the fourth filter for filtering, and then is amplified by the fourth low-noise amplifier and transmitted to the radio frequency transceiver for subsequent processing.

In the radio frequency front-end circuit according to some embodiments of this disclosure, the four receiving circuits: the first signal receiving circuit, the second signal receiving circuit, the third signal receiving circuit, and the fourth signal receiving circuit, can receive a signal at the same time; and the first signal transmitting circuit and/or the second signal transmitting circuit can be flexibly closed through the first double-pole double-throw switch and the first changeover switch or through the first double-pole double-throw switch and the second changeover switch. This circuit design is simple, and can shorten layout routing for radio frequency while implementing signal transmission and/or reception, thereby reducing path loss.

In addition, it should be noted that to shorten circuit design time of manufacturers and reduce costs, the radio frequency front-end circuit of this disclosure may further be integrated into an integrated circuit chip.

Some embodiments of this disclosure further provide a mobile terminal, including: a controller; and the radio frequency front-end circuit according to the foregoing embodiments. The controller is configured to control opening and closing of a first double-pole double-throw switch, opening and closing of a first changeover switch, and/or opening and closing of a second changeover switch.

In addition, the controller is further configured to control opening and closing of the second double-pole double-throw switch and/or opening and closing of the third double-pole double-throw switch.

The foregoing describes the embodiments of this disclosure with reference to the accompanying drawings. However, this disclosure is not limited to the foregoing specific embodiments. The foregoing specific embodiments are merely illustrative rather than restrictive.

## Claims

1. A radio frequency front-end circuit, comprising:
a first signal receiving circuit (1), configured to receive a signal through one antenna, among a first antenna (2) and a second antenna (3), connected to the first signal receiving circuit (1);
a second signal receiving circuit (4), configured to receive a signal through one antenna, among a third antenna (5) and a fourth antenna (6), connected to the second signal receiving circuit (4);
a first signal transmitting circuit and a second signal transmitting circuit, wherein the first signal transmitting circuit comprises a first power amplifier, the second signal transmitting circuit comprises a second power amplifier;
a first changeover switch (7) and a second changeover switch (8); and
a first double-pole double-throw switch (9) which comprises a first fixed terminal connected to the first changeover switch (7), a second fixed terminal connected to the second changeover switch (8), a first movable terminal only connected to an output terminal of the first power amplifier, and a second movable terminal only connected to an output terminal of the second power amplifier, wherein the first double-pole double-throw switch (9) is configured to connect the first fixed terminal to the first movable terminal or the second movable terminal, and further configured to connect the second fixed terminal to the first movable terminal or the second movable terminal, wherein
the first signal transmitting circuit is closed through the first double-pole double-throw switch (9) and the first changeover switch (7), and is configured to transmit a signal through the first antenna (2) or the second antenna (3); or the first signal transmitting circuit is closed through the first double-pole double-throw switch (9) and the second changeover switch (8), and is configured to transmit a signal through the third antenna (5) or the fourth antenna (6); and
the second signal transmitting circuit is closed through the first double-pole double-throw switch (9) and the first changeover switch (7), and is configured to transmit a signal through the first antenna (2) or the second antenna (3); or the second signal transmitting circuit is closed through the first double-pole double-throw switch (9) and the second changeover switch (8), and is configured to transmit a signal through the third antenna (5) or the fourth antenna (6).

2. The radio frequency front-end circuit according to claim 1, further comprising:
a second double-pole double-throw switch (10), configured to connect to the first signal receiving circuit (1) or the first signal transmitting circuit or the second signal transmitting circuit, wherein the second double-pole double-throw switch (10) comprises a third movable terminal, a third fixed terminal connected to the first antenna (2), and a fourth fixed terminal connected to the second antenna (3), wherein the second double-pole double-throw switch (10) is configured to connect the first movable terminal to the third fixed terminal or the fourth fixed terminal.

3. The radio frequency front-end circuit according to claim 2, further comprising a third signal receiving circuit (11), configured to connect to a fourth movable terminal of the second double-pole double-throw switch (10) and receive a signal through one of the first antenna (2) and the second antenna (3), wherein the second double-pole double-throw switch (10) is further configured to connect the fourth movable terminal to the third fixed terminal or the fourth fixed terminal.

4. The radio frequency front-end circuit according to claim 2, wherein
when a fifth movable terminal of the first changeover switch (7) is configured to connect to a fifth fixed terminal of the first changeover switch (7), the first signal receiving circuit (1) is closed;
when the fifth movable terminal is configured to connect to a sixth fixed terminal of the first changeover switch (7), and the first movable terminal is configured to connect to the first fixed terminal, the first signal transmitting circuit is closed, and the first fixed terminal is configured to connect to the sixth fixed terminal; and
when the fifth movable terminal is configured to connect to the sixth fixed terminal of the first changeover switch (7), and the second movable terminal is configured to connect to the first fixed terminal, the second signal transmitting circuit is closed.

5. The radio frequency front-end circuit according to claim 1, further comprising: a third double-pole double-throw switch (12) connected to the second signal receiving circuit (4) or the first signal transmitting circuit or the second signal transmitting circuit, comprising: a sixth movable terminal, a seventh fixed terminal connected to the third antenna (5), and an eighth fixed terminal connected to the fourth antenna (6), wherein the third double-pole double-throw switch (12) is configured to connect the sixth movable terminal to the seventh fixed terminal or the eighth fixed terminal.

6. The radio frequency front-end circuit according to claim 5, further comprising a fourth signal receiving circuit (13), configured to connect to the seventh movable terminal of the third double-pole double-throw switch (12), receive a signal through one of the third antenna (5) and the fourth antenna (6), wherein the third double-pole double-throw switch (12) is further configured to connect the seventh movable terminal to the seventh fixed terminal or the eighth fixed terminal.

7. The radio frequency front-end circuit according to claim 5, wherein
when an eighth movable terminal of the second changeover switch (8) is configured to connect to a ninth fixed terminal of the second changeover switch (8), the second signal receiving circuit (4) is closed;
when the eighth movable terminal is configured to connect to a tenth fixed terminal of the second changeover switch (8), and the first movable terminal is configured to connect to the second fixed terminal, the first signal transmitting circuit is closed, and the second fixed terminal is configured to connect to the tenth fixed terminal; and
when the eighth movable terminal is configured to connect to the tenth fixed terminal of the second changeover switch (8), and the second movable terminal is configured to connect to the second fixed terminal, the second signal transmitting circuit is closed.

8. The radio frequency front-end circuit according to claim 4, wherein the first signal receiving circuit (1) comprises a first low-noise amplifier and a first filter, wherein
an input terminal of the first low-noise amplifier is configured to connect to the fifth fixed terminal; and
the first filter is configured to connect to both the fifth movable terminal and the third movable terminal.

9. The radio frequency front-end circuit according to claim 7, wherein the second signal receiving circuit (4) comprises a second low-noise amplifier and a second filter, wherein
an input terminal of the second low-noise amplifier is configured to connect to the ninth fixed terminal; and
the second filter is configured to connect to both the eighth movable terminal and the sixth movable terminal.

10. The radio frequency front-end circuit according to claim 3, wherein the third signal receiving circuit (11) comprises a third low-noise amplifier and a third filter, wherein
the third filter is configured to connect to both an input terminal of the third low-noise amplifier and the fourth movable terminal.

11. The radio frequency front-end circuit according to claim 6, wherein the fourth signal receiving circuit (13) comprises a fourth low-noise amplifier and a fourth filter, wherein
the fourth filter is configured to connect to both an input terminal of the fourth low-noise amplifier and the seventh movable terminal.

12. The radio frequency front-end circuit according to claim 1, further comprising:
a radio frequency transceiver, wherein the radio frequency transceiver is configured to connect to all of the first signal receiving circuit (1), the second signal receiving circuit (4), the first signal transmitting circuit, and the second signal transmitting circuit.

13. A mobile terminal, comprising:
a controller; and
the radio frequency front-end circuit according to any one of claims 1 to 12, wherein
the controller is configured to control opening and closing of the first double-pole double-throw switch (9), opening and closing of the first changeover switch (7), and/or opening and closing of the second changeover switch (8).

## Patentansprüche

1. Funkfrequenz-Frontendschaltung, umfassend:
eine erste Signalempfangsschaltung (1), die ausgelegt ist, um ein Signal über eine Antenne aus einer ersten Antenne (2) und einer zweiten Antenne (3), die mit der ersten Signalempfangsschaltung (1) verbunden ist, zu empfangen;
eine zweite Signalempfangsschaltung (4), die ausgelegt ist, um ein Signal über eine Antenne aus einer dritten Antenne (5) und einer vierten Antenne (6), die mit der zweiten Signalempfangsschaltung (4) verbunden ist, zu empfangen;
eine erste Signalübertragungsschaltung und eine zweite Signalübertragungsschaltung, wobei die erste Signalübertragungsschaltung einen ersten Leistungsverstärker umfasst und die zweite Signalübertragungsschaltung einen zweiten Leistungsverstärker umfasst;
einen ersten Umschalter (7) und einen zweiten Umschalter (8); und
einen ersten zweipoligen Schalter mit zwei Schaltstellungen (9), der einen ersten festen Anschluss, der mit dem ersten Umschalter (7) verbunden ist, einen zweiten festen Anschluss, der mit dem zweiten Umschalter (8) verbunden ist, einen ersten bewegbaren Anschluss, der nur mit einem Ausgangsanschluss des ersten Leistungsverstärkers verbunden ist, und einen zweiten bewegbaren Anschluss, der nur mit einem Ausgangsanschluss des zweiten Leistungsverstärkers verbunden ist, umfasst, wobei der erste zweipolige Schalter mit zwei Schaltstellungen (9) ausgelegt ist, um den ersten festen Anschluss mit dem ersten bewegbaren Anschluss oder dem zweiten bewegbaren Anschluss zu verbinden, und ferner ausgelegt ist, um den zweiten festen Anschluss mit dem ersten bewegbaren Anschluss oder dem zweiten bewegbaren Anschluss zu verbinden,
wobei die erste Signalübertragungsschaltung über den ersten zweipoligen Schalter mit zwei Schaltstellungen (9) und den ersten Umschalter (7) geschlossen wird und ausgelegt ist, um ein Signal über die erste Antenne (2) oder die zweite Antenne (3) zu übertragen, oder wobei die erste Signalübertragungsschaltung über den ersten zweipoligen Schalter mit zwei Schaltstellungen (9) und den zweiten Umschalter (8) geschlossen wird und ausgelegt ist, um ein Signal über die dritte Antenne (5) oder die vierte Antenne (6) zu übertragen, und
wobei die zweite Signalübertragungsschaltung über den ersten zweipoligen Schalter mit zwei Schaltstellungen (9) und den ersten Umschalter (7) geschlossen wird und ausgelegt ist, um ein Signal über die erste Antenne (2) oder die zweite Antenne (3) zu übertragen, oder wobei die zweite Signalübertragungsschaltung über den ersten zweipoligen Schalter mit zwei Schaltstellungen (9) und den zweiten Umschalter (8) geschlossen wird und ausgelegt ist, um ein Signal über die dritte Antenne (5) oder die vierte Antenne (6) zu übertragen.

2. Funkfrequenz-Frontendschaltung nach Anspruch 1, ferner umfassend:
einen zweiten zweipoligen Schalter mit zwei Schaltstellungen (10), der ausgelegt ist, um sich mit der ersten Signalempfangsschaltung (1) oder der ersten Signalübertragungsschaltung oder der zweiten Signalübertragungsschaltung zu verbinden, wobei der zweite zweipolige Schalter mit zwei Schaltstellungen (10) einen dritten bewegbaren Anschluss, einen dritten festen Anschluss, der mit der ersten Antenne (2) verbunden ist, und einen vierten festen Anschluss, der mit der zweiten Antenne (3) verbunden ist, umfasst, wobei der zweite zweipolige Schalter mit zwei Schaltstellungen (10) ausgelegt ist, um den ersten bewegbaren Anschluss mit dem dritten festen Anschluss oder dem vierten festen Anschluss zu verbinden.

3. Funkfrequenz-Frontendschaltung nach Anspruch 2, ferner umfassend eine dritte Signalempfangsschaltung (11), die ausgelegt ist, um sich mit einem vierten bewegbaren Anschluss des zweiten zweipoligen Schalters mit zwei Schaltstellungen (10) zu verbinden und ein Signal entweder über die erste Antenne (2) oder die zweite Antenne (3) zu empfangen, wobei der zweite zweipolige Schalter mit zwei Schaltstellungen (10) ferner ausgelegt ist, um den vierten bewegbaren Anschluss mit dem dritten festen Anschluss oder dem vierten festen Anschluss zu verbinden.

4. Funkfrequenz-Frontendschaltung nach Anspruch 2, wobei die erste Signalempfangsschaltung (1) geschlossen ist, wenn ein fünfter bewegbarer Anschluss des ersten Umschalters (7) ausgelegt ist, um sich mit einem fünften festen Anschluss des ersten Umschalters (7) zu verbinden;
die erste Signalübertragungsschaltung geschlossen ist und der erste feste Anschluss ausgelegt ist, um sich mit dem sechsten festen Anschluss zu verbinden, wenn der fünfte bewegbare Anschluss ausgelegt ist, um sich mit einem sechsten festen Anschluss des ersten Umschalters (7) zu verbinden und der erste bewegbare Anschluss ausgelegt ist, um sich mit dem ersten festen Anschluss zu verbinden, und
die zweite Signalübertragungsschaltung geschlossen ist, wenn der fünfte bewegbare Anschluss ausgelegt ist, um sich mit dem sechsten festen Anschluss des ersten Umschalters (7) zu verbinden und der zweite bewegbare Anschluss ausgelegt ist, um sich mit dem ersten festen Anschluss zu verbinden.

5. Funkfrequenz-Frontendschaltung nach Anspruch 1, ferner umfassend: einen dritten zweipoligen Schalter mit zwei Schaltstellungen (12), der mit der zweiten Signalempfangsschaltung (4) oder der ersten Signalübertragungsschaltung oder der zweiten Signalübertragungsschaltung verbunden ist und Folgendes umfasst: einen sechsten bewegbaren Anschluss, einen siebten festen Anschluss, der mit der dritten Antenne (5) verbunden ist, und einen achten festen Anschluss, der mit der vierten Antenne (6) verbunden ist, wobei der dritte zweipolige Schalter mit zwei Schaltstellungen (12) ausgelegt ist, um den sechsten bewegbaren Anschluss mit dem siebten festen Anschluss oder dem achten festen Anschluss zu verbinden.

6. Funkfrequenz-Frontendschaltung nach Anspruch 5, ferner umfassend eine vierte Signalempfangsschaltung (13), die ausgelegt ist, um sich mit einem siebten bewegbaren Anschluss des dritten zweipoligen Schalters mit zwei Schaltstellungen (12) zu verbinden und ein Signal entweder über die dritte Antenne (5) oder die vierte Antenne (6) zu empfangen, wobei der dritte zweipolige Schalter mit zwei Schaltstellungen (12) ferner ausgelegt ist, um den siebten bewegbaren Anschluss mit dem siebten festen Anschluss oder dem achten festen Anschluss zu verbinden.

7. Funkfrequenz-Frontendschaltung nach Anspruch 5, wobei die zweite Signalempfangsschaltung (4) geschlossen ist, wenn ein achter bewegbarer Anschluss des zweiten Umschalters (8) ausgelegt ist, um sich mit einem neunten festen Anschluss des zweiten Umschalters (8) zu verbinden;
die erste Signalübertragungsschaltung geschlossen ist und der zweite feste Anschluss ausgelegt ist, um sich mit dem zehnten festen Anschluss zu verbinden, wenn der achte bewegbare Anschluss ausgelegt ist, um sich mit einem zehnten festen Anschluss des zweiten Umschalters (8) zu verbinden und der erste bewegbare Anschluss ausgelegt ist, um sich mit dem zweiten festen Anschluss zu verbinden; und
die zweite Signalübertragungsschaltung geschlossen ist, wenn der achte bewegbare Anschluss ausgelegt ist, um sich mit dem zehnten festen Anschluss des zweiten Umschalters (8) zu verbinden und der zweite bewegbare Anschluss ausgelegt ist, um sich mit dem zweiten festen Anschluss zu verbinden.

8. Funkfrequenz-Frontendschaltung nach Anspruch 4, wobei die erste Signalempfangsschaltung (1) einen ersten rauscharmen Verstärker und einen ersten Filter umfasst, wobei
ein Eingangsanschluss des ersten rauscharmen Verstärkers ausgelegt ist, um sich mit dem fünften festen Anschluss zu verbinden; und
der erste Filter ausgelegt ist, um sich sowohl mit dem fünften bewegbaren Anschluss als auch dem dritten bewegbaren Anschluss zu verbinden.

9. Funkfrequenz-Frontendschaltung nach Anspruch 7, wobei die zweite Signalempfangsschaltung (4) einen zweiten rauscharmen Verstärker und einen zweiten Filter umfasst, wobei
ein Eingangsanschluss des zweiten rauscharmen Verstärkers ausgelegt ist, um sich mit dem neunten festen Anschluss zu verbinden; und
der zweite Filter ausgelegt ist, um sich sowohl mit dem achten bewegbaren Anschluss als auch dem siebten bewegbaren Anschluss zu verbinden.

10. Funkfrequenz-Frontendschaltung nach Anspruch 3, wobei die dritte Signalempfangsschaltung (11) einen dritten rauscharmen Verstärker und einen dritten Filter umfasst, wobei
der dritte Filter ausgelegt ist, um sich sowohl mit einem Eingangsanschluss des dritten rauscharmen Verstärkers als auch dem vierten bewegbaren Anschluss zu verbinden.

11. Funkfrequenz-Frontendschaltung nach Anspruch 6, wobei die vierte Signalempfangsschaltung (13) einen vierten rauscharmen Verstärker und einen vierten Filter umfasst, wobei
der vierte Filter ausgelegt ist, um sich sowohl mit einem Eingangsanschluss des vierten rauscharmen Verstärkers als auch dem siebten bewegbaren Anschluss zu verbinden.

12. Funkfrequenz-Frontendschaltung nach Anspruch 1, ferner umfassend:
einen Funkfrequenz-Sendeempfänger, wobei der Funkfrequenz-Sendeempfänger ausgelegt ist, um sich mit der ersten Signalempfangsschaltung (1), der zweiten Signalempfangsschaltung (4), der ersten Signalübertragungsschaltung und der zweiten Signalübertragungsschaltung zu verbinden.

13. Mobiles Endgerät, umfassend:
eine Steuerung; und
die Funkfrequenz-Frontendschaltung nach einem der Ansprüche 1 bis 12, wobei
die Steuerung ausgelegt ist, um das Öffnen und Schließen des ersten zweipoligen Schalters mit zwei Schaltstellungen (9), das Öffnen und Schließen des ersten Umschalters (7) und/oder das Öffnen und Schließen des zweiten Umschalters (8) zu steuern.

## Revendications

1. Circuit frontal radiofréquence, comprenant :
un premier circuit de réception de signal (1), configuré pour recevoir un signal par l'intermédiaire d'une antenne, entre une première antenne (2) et une deuxième antenne (3), connectée au premier circuit de réception de signal (1) ;
un deuxième circuit de réception de signal (4), configuré pour recevoir un signal par l'intermédiaire d'une antenne, entre une troisième antenne (5) et une quatrième antenne (6), connectée au deuxième circuit de réception de signal (4) ;
un premier circuit de transmission de signal et un second circuit de transmission de signal, dans lequel le premier circuit de transmission de signal comprend un premier amplificateur de puissance, le second circuit de transmission de signal comprend un second amplificateur de puissance ;
un premier commutateur inverseur (7) et un second commutateur inverseur (8) ; et
un premier commutateur bipolaire bidirectionnel (9) qui comprend une première borne fixe connectée au premier commutateur inverseur (7), une deuxième borne fixe connectée au second commutateur inverseur (8), une première borne mobile connectée uniquement à une borne de sortie du premier amplificateur de puissance, et une deuxième borne mobile connectée uniquement à une borne de sortie du second amplificateur de puissance, dans lequel le premier commutateur bipolaire bidirectionnel (9) est configuré pour connecter la première borne fixe à la première borne mobile ou à la deuxième borne mobile, et configuré en outre pour connecter la deuxième borne fixe à la première borne mobile ou à la deuxième borne mobile, dans lequel le premier circuit de transmission de signal est fermé par l'intermédiaire du premier commutateur bipolaire bidirectionnel (9) et du premier commutateur inverseur (7), et est configuré pour transmettre un signal par l'intermédiaire de la première antenne (2) ou de la deuxième antenne (3) ; ou le premier circuit de transmission de signal est fermé par l'intermédiaire du premier commutateur bipolaire bidirectionnel (9) et du second commutateur inverseur (8), et est configuré pour transmettre un signal par l'intermédiaire de la troisième antenne (5) ou de la quatrième antenne (6) ; et
le second circuit de transmission de signal est fermé par l'intermédiaire du premier commutateur bipolaire bidirectionnel (9) et du premier commutateur inverseur (7), et est configuré pour transmettre un signal par l'intermédiaire de la première antenne (2) ou de la deuxième antenne (3) ; ou le second circuit de transmission de signal est fermé par l'intermédiaire du premier commutateur bipolaire bidirectionnel (9) et du second commutateur inverseur (8), et est configuré pour transmettre un signal par l'intermédiaire de la troisième antenne (5) ou de la quatrième antenne (6).

2. Circuit frontal radiofréquence selon la revendication 1, comprenant en outre :
un deuxième commutateur bipolaire bidirectionnel (10), configuré pour se connecter au premier circuit de réception de signal (1) ou au premier circuit de transmission de signal ou au second circuit de transmission de signal, dans lequel le deuxième commutateur bipolaire bidirectionnel (10) comprend une troisième borne mobile, une troisième borne fixe connectée à la première antenne (2), et une quatrième borne fixe connectée à la deuxième antenne (3), dans lequel le deuxième commutateur bipolaire bidirectionnel (10) est configuré pour connecter la première borne mobile à la troisième borne fixe ou à la quatrième borne fixe.

3. Circuit frontal radiofréquence selon la revendication 2, comprenant en outre un troisième circuit de réception de signal (11), configuré pour se connecter à une quatrième borne mobile du deuxième commutateur bipolaire bidirectionnel (10) et recevoir un signal par l'intermédiaire de l'une de la première antenne (2) et de la deuxième antenne (3), dans lequel le deuxième commutateur bipolaire bidirectionnel (10) est en outre configuré pour connecter la quatrième borne mobile à la troisième borne fixe ou à la quatrième borne fixe.

4. Circuit frontal radiofréquence selon la revendication 2, dans lequel
lorsqu'une cinquième borne mobile du premier commutateur inverseur (7) est configurée pour se connecter à une cinquième borne fixe du premier commutateur inverseur (7), le premier circuit de réception de signal (1) est fermé ;
lorsque la cinquième borne mobile est configurée pour se connecter à une sixième borne fixe du premier commutateur inverseur (7), et que la première borne mobile est configurée pour se connecter à la première borne fixe, le premier circuit de transmission de signal est fermé, et la première borne fixe est configurée pour se connecter à la sixième borne fixe ; et
lorsque la cinquième borne mobile est configurée pour se connecter à la sixième borne fixe du premier commutateur inverseur (7), et que la deuxième borne mobile est configurée pour se connecter à la première borne fixe, le second circuit de transmission de signal est fermé.

5. Circuit frontal radiofréquence selon la revendication 1, comprenant en outre : un troisième commutateur bipolaire bidirectionnel (12) connecté au deuxième circuit de réception de signal (4) ou au premier circuit de transmission de signal ou au second circuit de transmission de signal, comprenant : une sixième borne mobile, une septième borne fixe connectée à la troisième antenne (5), et une huitième borne fixe connectée à la quatrième antenne (6), dans lequel le troisième commutateur bipolaire bidirectionnel (12) est configuré pour connecter la sixième borne mobile à la septième borne fixe ou à la huitième borne fixe.

6. Circuit frontal radiofréquence selon la revendication 5, comprenant en outre un quatrième circuit de réception de signal (13), configuré pour se connecter à la septième borne mobile du troisième commutateur bipolaire bidirectionnel (12), recevoir un signal par l'intermédiaire de l'une de la troisième antenne (5) et de la quatrième antenne (6), dans lequel le troisième commutateur bipolaire bidirectionnel (12) est en outre configuré pour connecter la septième borne mobile à la septième borne fixe ou à la huitième borne fixe.

7. Circuit frontal radiofréquence selon la revendication 5, dans lequel
lorsqu'une huitième borne mobile du second commutateur inverseur (8) est configurée pour se connecter à une neuvième borne fixe du second commutateur inverseur (8), le deuxième circuit de réception de signal (4) est fermé ;
lorsque la huitième borne mobile est configurée pour se connecter à une dixième borne fixe du second commutateur inverseur (8), et que la première borne mobile est configurée pour se connecter à la deuxième borne fixe, le premier circuit de transmission de signal est fermé, et la deuxième borne fixe est configurée pour se connecter à la dixième borne fixe ; et
lorsque la huitième borne mobile est configurée pour se connecter à la dixième borne fixe du second commutateur inverseur (8), et que la deuxième borne mobile est configurée pour se connecter à la deuxième borne fixe, le second circuit de transmission de signal est fermé.

8. Circuit frontal radiofréquence selon la revendication 4, dans lequel le premier circuit de réception de signal (1) comprend un premier amplificateur à faible bruit et un premier filtre, dans lequel
une borne d'entrée du premier amplificateur à faible bruit est configurée pour se connecter à la cinquième borne fixe ; et
le premier filtre est configuré pour se connecter à la fois à la cinquième borne mobile et à la troisième borne mobile.

9. Circuit frontal radiofréquence selon la revendication 7, dans lequel le deuxième circuit de réception de signal (4) comprend un deuxième amplificateur à faible bruit et un deuxième filtre, dans lequel
une borne d'entrée du deuxième amplificateur à faible bruit est configurée pour se connecter à la neuvième borne fixe ; et
le deuxième filtre est configuré pour se connecter à la fois à la huitième borne mobile et à la sixième borne mobile.

10. Circuit frontal radiofréquence selon la revendication 3, dans lequel le troisième circuit de réception de signal (11) comprend un troisième amplificateur à faible bruit et un troisième filtre, dans lequel
le troisième filtre est configuré pour se connecter à la fois à une borne d'entrée du troisième amplificateur à faible bruit et à la quatrième borne mobile.

11. Circuit frontal radiofréquence selon la revendication 6, dans lequel le quatrième circuit de réception de signal (13) comprend un quatrième amplificateur à faible bruit et un quatrième filtre, dans lequel
le quatrième filtre est configuré pour se connecter à la fois à une borne d'entrée du quatrième amplificateur à faible bruit et à la septième borne mobile.

12. Circuit frontal radiofréquence selon la revendication 1, comprenant en outre :
un émetteur-récepteur radiofréquence, dans lequel l'émetteur-récepteur radiofréquence est configuré pour se connecter à chacun du premier circuit de réception de signal (1), du deuxième circuit de réception de signal (4), du premier circuit de transmission de signal et du second circuit de transmission de signal.

13. Terminal mobile, comprenant :
un dispositif de commande ; et
le circuit frontal radiofréquence selon l'une quelconque des revendications 1 à 12, dans lequel
le dispositif de commande est configuré pour commander l'ouverture et la fermeture du premier commutateur bipolaire bidirectionnel (9), l'ouverture et la fermeture du premier commutateur inverseur (7), et/ou l'ouverture et la fermeture du second commutateur inverseur (8).
